# FASCICULE DE BREVET EUROPEEN

(11) **EP 0 862 005 B1**
(45) Date de publication et mention de la délivrance du brevet: **19.11.2003**
(21) Numéro de dépôt: 98400260.0
(22) Date de dépôt: 06.02.1998
(51) Int. Cl.: F16K 37/00, F16K 31/04, F16K 31/163

(54) **Robinet à actionneur dont l'aptitude au fonctionnement peut être surveillée**
Ventilantrieb mit Überwachung der Funktionsfähigkeit
Valve actuator with surveillance of system operability

(30) Priorité: 21.02.1997 FR 9702087
(43) Date de publication de la demande: 02.09.1998
(73) Titulaire: KSB S.A.S, 92230 Gennevilliers (FR)
(72) Inventeur: Garrigues, Jean-Claude, 33140 Cadaujac (FR); Ferragne, Hubert, 33200 Bordeaux (FR); Duboy, Dominique, 33170 Gradignan (FR)
(74) Mandataire: Eidelsberg, Victor Albert

(56) Documents cités:
- EP-A- 0 629 804
- US-A- 4 211 263
- US-A- 4 542 649
- US-A- 4 759 224

## Description

L'invention se rapporte aux robinets et, plus particulièrement, aux robinets comprenant un actionneur alimenté par une source d'énergie. Cette source d'énergie peut être une source électrique, mais aussi et surtout une source qui fournit un fluide sous pression, notamment de l'air comprimé.

On connaît déjà, par exemple de US-A-4 759 224, un robinet à actionneur de ce type, qui comprend des moyens destinés à détecter que l'actionneur manoeuvre le robinet. Ces moyens de détection peuvent être constitués de contacts électriques de fin de course ou d'un potentiomètre déterminant la position du robinet.

Un robinet de ce genre a les inconvénients suivants. Si la source d'énergie est défaillante et n'est pas susceptible de fournir la puissance requise, l'actionneur ne sera pas en mesure de manoeuvrer le robinet. Dans de nombreuses installations où le robinet a une fonction de sécurité et doit fonctionner avec certitude à un instant donné, on veut pouvoir être sûr qu'à cet instant la source d'énergie est à même de fournir la puissance nécessaire et en conséquence, on souhaite pouvoir vérifier à l'avance qu'elle en est bien capable et être averti du fait qu'elle ne l'est plus. On n'est pas non plus averti de l'état, ni de l'usure du robinet Si un corps étranger fait obstacle à la manoeuvre du robinet, on n'en est pas non plus averti.

L'invention pallie ces inconvénients par un robinet à actionneur alimenté par une source d'énergie et comprenant des moyens destinés à détecter que l'actionneur manoeuvre le robinet. Suivant l'invention, il est prévu un premier capteur de mesure d'une grandeur représentative de la puissance consommée provenant de la source d'énergie et un circuit électronique relié au premier capteur et aux moyens de détection de manière à comparer, lorsque l'actionneur manoeuvre le robinet, la grandeur représentative de la puissance consommée provenant de la source d'énergie à une valeur de consigne et à émettre une instruction en fonction de la comparaison.

Si, alors que l'actionneur manoeuvre le robinet, le circuit électronique constate que la puissance réelle consommée provenant de la source d'énergie est supérieure à une première valeur de consigne, ce qui semble montrer qu'un obstacle s'oppose à la manoeuvre, ou est inférieure à une seconde valeur de consigne, ce qui semble montrer une usure trop importante du robinet, le circuit électronique émet une instruction. L'opérateur est averti qu'il doit intervenir sur le robinet.

Le robinet à actionneur peut comporter un second capteur de mesure d'une grandeur représentative de la puissance susceptible d'être fournie à l'actionneur par la source d'énergie, le circuit électronique étant relié au second capteur et aux moyens de détection de manière à comparer, lorsque l'actionneur ne manoeuvre pas le robinet, la grandeur représentative de la puissance susceptible d'être fournie à l'actionneur par la source d'énergie à une valeur de référence, et à émettre une instruction en fonction de cette comparaison.

Lorsque l'actionneur ne manoeuvre pas le robinet, le capteur mesure l'aptitude de la source à fournir un niveau de puissance suffisant. Si cette puissance est inférieure à la valeur de référence, le circuit électronique émet une instruction, par exemple une alarme.

Par instruction, on entend un signal donnant l'alarme, provoquant un arrêt ou fournissant une information d'état ou des données numériques concernant le robinet. Le signal peut être visuel, sonore ou électrique.

Suivant un mode de réalisation, la source d'énergie fournit un fluide sous pression, l'actionneur comporte un piston de vérin pneumatique et le premier capteur mesure la pression de fluide de part et d'autre du piston de vérin pneumatique. Le second capteur mesure la pression de fluide arrivant à l'actionneur en amont du piston de vérin pneumatique.

Suivant un autre mode de réalisation, la source d'énergie fournit du courant électrique, l'actionneur est un transducteur, électromécanique et le premier capteur mesure la puissance électrique consommée provenant de la source d'énergie lors de la manoeuvre du robinet. Le second capteur mesure la tension électrique appliquée par la source d'énergie à l'actionneur.

On peut, si on le souhaite, tirer profit immédiatement des instructions fournies par le circuit électronique, mais on peut également les mettre en mémoire afin de disposer d'un historique du fonctionnement du robinet.

Au dessin annexé, donné uniquement à titre d'exemple :
la figure 1 est un schéma d'un robinet à actionneur pneumatique, et
la figure 2 est un schéma d'un robinet à actionneur électrique.

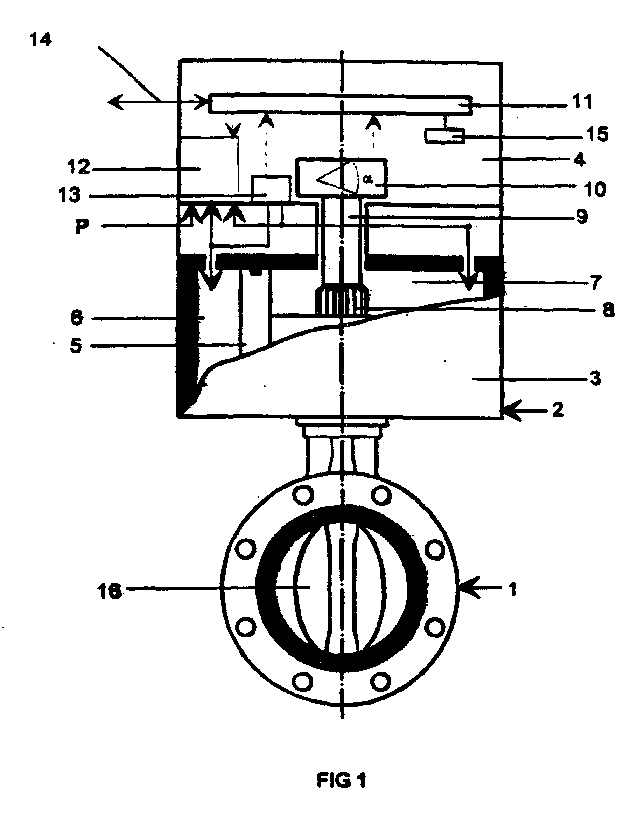

A la figure 1, il est monté sur un robinet 1, un actionneur 2, qui comporte une première partie 3 transformant l'énergie fournie par une source d'air comprimé non représentée en déplacement mécanique d'un obturateur du robinet 1, et une seconde partie 4 de contrôle et de commande de l'actionneur 2.

La première partie 3 comporte un vérin à piston 5 crémaillère, qui délimite deux chambres, dont l'une 6 d'admission reçoit l'air comprimé et dont l'autre 7 est à l'atmosphère lorsque l'actionneur 2 est à l'arrêt. La crémaillère du piston 5 se trouve dans la chambre 7 et engrène avec un pignon 8 monté sur un arbre 9 vertical, dont l'extrémité inférieure est solidaire en rotation d'un obturateur 1/4 tour 16 du robinet 1 et dont l'extrémité supérieure est reliée à un capteur 10 de position, qui se trouve dans la seconde partie 4 de contrôle de commande.

Le capteur 10 de position fournit, en fonction de l'angle α de rotation de l'arbre 9, un signal électrique de position du robinet 1 à un circuit électronique 11 de la seconde partie 4, par l'intermédiaire d'un conducteur électrique le reliant à celui-ci et est constitué par exemple d'un potentiomètre résistif, d'un capteur optique, de contacts électriques, ou de détecteurs de proximité inductifs ou capacitifs. La seconde partie 4 de contrôle et de commande comporte en outre une électro-vanne 12, qui, en fonction d'un signal électrique de commande fourni par le circuit électronique 11 sur un conducteur électrique, fait communiquer ou non un conduit de l'actionneur communiquant avec la source d'air comprimé et symbolisé par la lettre P avec la chambre 6 d'admission, un dispositif 13 de mesure des pressions régnant dans les chambres 6 et 7 et dans le conduit, qui fournit des signaux électriques de mesure des pressions au circuit électronique 11 par l'intermédiaire de conducteurs électriques. Le circuit électronique 11 communique avec l'extérieur par l'intermédiaire d'un bus 14. Le circuit électronique comporte un microprocesseur émettant les instructions, lequel est relié à une mémoire EEPROM 15, qui enregistre les instructions émises et qui peut être lue de l'extérieur par l'intermédiaire du circuit électrique 11 et du bus 14.

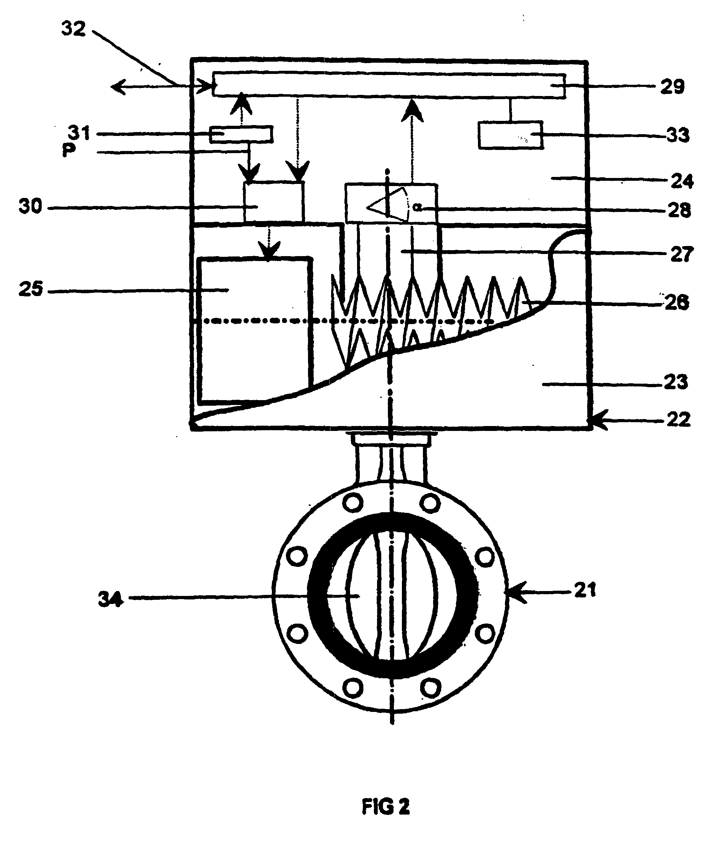

A la figure 2, il est monté sur un robinet 21, un actionneur 22, qui comporte une première partie 23 transformant l'énergie fournie par une source de tension électrique non représentée en un déplacement mécanique d'un obturateur du robinet 21, et une seconde partie 24 de contrôle et de commande de l'actionneur 22.

La première partie 23 comporte un moto-réducteur 25 actionnant une vis horizontale 26 engrenant avec un arbre 27 vertical, dont l'extrémité inférieure est solidaire en rotation d'un obturateur 1/4 tour 34 du robinet 21 et dont l'extrémité supérieure est reliée à un capteur 28 de position se trouvant dans la seconde partie 24 de contrôle et de commande.

Le capteur 28 de position fournit, en fonction de l'angle de rotation de l'arbre 27, un signal électrique de position du robinet 21 à un circuit électronique 29 de la seconde partie 24, par l'intermédiaire d'un conducteur électrique le reliant à celui-ci. La seconde partie 24 de contrôle et de commande comporte en outre un relais électrique 30, qui, en fonction d'un signal de commande envoyé par le circuit électronique 29 par l'intermédiaire d'un conducteur électrique, alimente ou non le moto-réducteur 25 en électricité fournie par la source de tension. Il est prévu dans la seconde partie 24 de l'actionneur un dispositif 31 de mesure du courant et de la tension fournis par l'arrivée de tension et de courant de l'actionneur, reliée à la source de tension et symbolisée par la lettre P. Le dispositif 31 de mesure fournit un signal électrique de mesure du courant et un signal électrique de mesure de la tension, par l'intermédiaire de conducteurs électriques, au circuit électronique 29. Le circuit électronique 29 communique avec l'extérieur par l'intermédiaire d'un bus 32. Le circuit électronique comporte un microprocesseur émettant les instructions, lequel est relié à une mémoire EEPROM 33, qui enregistre les instructions émises et qui peut être lue de l'extérieur par l'intermédiaire du circuit électronique 29 et du bus 32.

Lorsque l'on ne manoeuvre pas le robinet, ce qui est indiqué au circuit électronique 11 ou 29 par le capteur 10 ou 28 de position, le circuit électronique 11 ou 29 tient compte, dans l'actionneur pneumatique 2 suivant la figure 1, du signal de mesure de la pression régnant dans le conduit relié à la source d'air comprimé, fourni par le dispositif 13 de mesure, ou, dans l'actionneur électrique 22 suivant la figure 2, du signal de mesure de la tension, fourni par le dispositif de mesure 31. Le circuit électronique 11 ou 29 compare la valeur de la pression ou de la tension à une valeur de référence. de pression ou de tension, pouvant être prescrite de l'extérieur par l'intermédiaire du bus 14 ou 32 au circuit électronique 11 ou 29 ou mémorisée dans la mémoire 15 ou 33. Si la comparaison indique que la valeur de pression ou de tension est supérieure ou égale à la valeur de référence, le circuit électronique 11 ou 29 émet un premier signal sur le bus 14 ou 32. indiquant que l'actionneur reçoit suffisamment d'énergie de la source d'air comprimé ou de tension. Dans le cas contraire, le circuit électronique 11 ou 29 émet un premier signal d'alarme sur le bus 14 ou 32 indiquant l'inaptitude de l'actionneur pneumatique ou électrique à manoeuvrer correctement le robinet, due à l'insuffisance de son alimentation en énergie de la source.

Lorsque l'on manoeuvre le robinet, ce qui est indiqué au circuit électronique 11 ou 29 par le capteur de position 10 ou 29 de position, le circuit électronique actionne, dans l'actionneur pneumatique 2 suivant la figure 1, l'électro-vanne 12, et tient compte des signaux de mesure des pressions régnant dans les chambres 6 et 7 fournis par le dispositif 13 de mesure pour obtenir une valeur absolue de différence des pressions et, dans l'actionneur électrique 22 suivant la figure 2, le circuit électronique 29 actionne le relais 30 et tient compte du signal de mesure de tension et du signal de mesure de courant fournis par le dispositif 31 de mesure pour former une valeur de produit tension-courant. La valeur absolue de différence de pression et la valeur de produit tension-courant représentent chacune une valeur de la puissance absorbée pour la manoeuvre du robinet.

La circuit électronique 11 ou 29 compare cette valeur de puissance à une première valeur de consigne pouvant lui être prescrite de l'extérieur par l'intermédiaire du bus 14 ou 32 ou mémorisée dans la mémoire 15 ou 33. Si la comparaison indique que la valeur de puissance est supérieure à la première valeur de consigne, le circuit électronique 11 ou 29 émet un deuxième signal d'alarme sur le bus 14 ou 32, indiquant la présence d'un obstacle gênant la manoeuvre du robinet ou d'un effort de manoeuvre trop important.

Le circuit électronique 11 ou 29 compare également la valeur de puissance à une seconde valeur de consigne, inférieure à la première, pouvant lui être prescrite de l'extérieur par l'intermédiaire du bus 14 ou 32 ou mémorisée dans la mémoire 15 ou 33. Si la comparaison indique que la valeur de puissance est inférieure à la seconde valeur de consigne, le circuit électronique 11 ou 29 émet un signal indiquant un état d'usure trop avancé du robinet 1 ou 21, sur le bus 14 ou 32. Si la comparaison indique que la valeur de puissance est comprise entre les première et seconde valeurs de consigne, le circuit électronique 11 ou 29 émet sur le bus 14 ou 32 un signal indiquant que le robinet est manoeuvré de manière sûre. On peut également prévoir dans ce cas que le circuit électronique 11 ou 29 n'émette pas d'instruction.

## Revendications

1. Robinet à actionneur alimenté par une source d'énergie et comprenant des moyens (10,28) destinés à détecter que l'actionneur manoeuvre le robinet,
**caractérisé par** un premier capteur (13,31) de mesure d'une grandeur représentative de la puissance consommée provenant de la source d'énergie et par un circuit électronique (11,29) relié au premier capteur (13,31) et aux moyens (10,28) de détection de manière à comparer, lorsque l'actionneur manoeuvre le robinet, la grandeur représentative de la puissance consommée provenant de la source d'énergie à une valeur de consigne, et à émettre une instruction en fonction de la comparaison.

2. Robinet à actionneur suivant la revendication 1, **caractérisé par** un second capteur (13,31) de mesure d'une grandeur représentative de la puissance susceptible d'être fournie à l'actionneur par la source d'énergie, le circuit électronique (11,29) étant relié au second capteur (13,31) et aux moyens de détection de manière à comparer lorsque l'actionneur ne manoeuvre pas le robinet, la grandeur représentative de la puissance susceptible d'être fournie à l'actionneur par la source d'énergie à une valeur de référence, et à émettre une instruction en fonction de cette comparaison.

3. Robinet suivant la revendication 1 ou 2, **caractérisé en ce que** la sources d'énergie fournit un fluide sous pression, l'actionneur comporte un piston (5) de vérin pneumatique et le premier capteur (13) mesure la pression de fluide de part et d'autre du piston (5) de vérin pneumatique.

4. Robinet suivant la revendication 2 et 3, **caractérisé en ce que** le second capteur (13) mesure la pression de fluide arrivant à l'actionneur en amont du piston (5) de vérin pneumatique.

5. Robinet suivant la revendication 1 ou 2, **caractérisé en ce que** la source d'énergie fournit du courant électrique, l'actionneur est un transducteur (23) électromécanique et le premier capteur (31) mesure la puissance électrique consommée provenant de la source d'énergie lors de la manoeuvre du robinet.

6. Robinet suivant les revendications 2 et 5, **caractérisé en ce que** le second capteur (31) mesure la tension électrique appliquée par la source d'énergie à l'actionneur.

7. Robinet suivant la revendication 1, **caractérisé en ce que** la valeur de consigne est une première valeur que la puissance réelle consommée provenant de la source d'énergie ne doit pas dépasser.

8. Robinet suivant la revendication 1, **caractérisé en ce que** la valeur de consigne est une seconde valeur à laquelle la puissance réelle consommée provenant de la source d'énergie ne doit pas devenir inférieure.

9. Robinet suivant la revendication 2, **caractérisé en ce que** la valeur de référence est une valeur à laquelle la grandeur réelle représentative de la puissance susceptible d'être fournie à l'actionneur par la source d'énergie ne doit pas devenir inférieure.

10. Robinet suivant l'une des revendications précédentes, **caractérisé en ce que** l'actionneur comporte une mémoire (15,33) destinée à mémoriser les instructions émises par le circuit électronique (11,29) et les valeurs de consigne et de référence.

## Patentansprüche

1. Ventil mit einem durch eine Energiequelle versorgten Steller und Vorrichtungen (11,28) zur Überwachung, ob der Steller das Ventil betätigt,
**gekennzeichnet durch** einen ersten Sensor (13,31) zum Messen einer repräsentativen Größe der verbrauchten Leistung, die von der Energiequelle stammt, und **durch** einen elektronischen Schaltkreis (11,29), der mit dem ersten Sensor (13,31) und mit den Überwachungsvorrichtungen (10,28) derart verbunden ist, dass bei einer Betätigung des Ventils **durch** den Steller die repräsentative Größe der von der Energiequelle stammenden verbrauchten Leistung mit einem Sollwert verglichen und in Abhängigkeit vom Vergleich ein Befehl ausgegeben wird.

2. Ventil mit Steller gemäß Anspruch 1, **gekennzeichnet durch** einen zweiten Sensor (13,31) zum Messen einer repräsentativen Größe der Leistung, die dem Steller von der Energiequelle zur Verfügung gestellt wird, wobei der elektronische Schaltkreis (11,29) mit einem zweiten Sensor (13,31) und mit den Überwachungsvorrichtungen derart verbunden ist, dass bei einer Nicht-Betätigung des Ventils **durch** den Steller die repräsentative Größe der Leistung, die dem Steller von der Energiequelle zur Verfügung gestellt werden kann, mit einem Referenzwert verglichen und in Abhängigkeit vom Vergleich ein Befehl ausgegeben wird.

3. Ventil gemäß Anspruch 1 oder 2, **dadurch gekennzeichnet, dass** die Energiequelle ein Fluid unter Druck liefert, der Steller einen pneumatischen Zylinderkolben (5) enthält und der erste Sensor (13) den Druck des Fluids auf beiden Seiten des Zylinderkolbens (5) misst.

4. Ventil gemäß der Ansprüche 2 und 3, **dadurch gekennzeichnet, dass** der zweite Sensor (13) den Druck des Fluids misst, das den Steller oberhalb des Zylinderkolbens (5) erreicht.

5. Ventil gemäß Anspruch 1 oder 2, **dadurch gekennzeichnet, dass** die Energiequelle elektrischen Strom liefert, der Steller ein elektromechanischer Wandler (23) ist und der erste Sensor (31) bei einer Betätigung des Ventils die von der Energiequelle kommende, verbrauchte elektrische Leistung misst.

6. Ventil gemäß Anspruch 2 und 5, **dadurch gekennzeichnet, dass** der Sollwert ein erster Sensor (31) die elektrische Spannung misst, die von der Energiequelle an den Steller angelegt wird.

7. Ventil gemäß Anspruch 1, **dadurch gekennzeichnet, dass** der Sollwert ein erster Wert ist, den die tatsächlich verbrauchte, von der Energiequelle kommende Leistung nicht überschreiten darf.

8. Ventil gemäß Anspruch 1, **dadurch gekennzeichnet, dass** der Sollwert ein zweiter Wert ist, den die tatsächlich verbrauchte, von der Energiequelle kommende Leistung nicht unterschreiten darf

9. Ventil gemäß Anspruch 2, **dadurch gekennzeichnet, dass** der Referenzwert ein Wert ist, den die tatsächliche repräsentative Größe der Leistung, die durch die Energiequelle an den Steller geliefert werden kann, nicht unterschreiten darf.

10. Ventil gemäß einer der vorhergehenden Ansprüche, **dadurch gekennzeichnet, dass** der Steller einen Speicher (15,33) enthält, der dazu bestimmt ist, die durch den elektronischen Schaltkreis (11,29) ausgegebenen Befehle sowie die Soll- und Referenzwerte zu speichern.

## Claims

1. Valve with an actuator which consumes power from an energy source and which comprises a device (10,28) capable of detecting that the actuator is operating the valve,
**characterized by** a first sensor (3, 31) for measuring a value representative of the power consumption from the energy source and by an electronic circuit (11, 29) connected to the first sensor (3, 31) and to the device (10, 28) so as to compare the value representing the power consumption from the energy source with a set value, during operation of the valve by the actuator, and to provide a command on the basis of this comparison.

2. Valve with an actuator according to claim 1, **characterized by** a second sensor (13, 31) for measuring a value representative of the power capable of being supplied to the actuator by the energy source, the electronic circuit (11, 29) being connected to the second sensor (13, 31)and to the device so as to compare the value representing the power capable of being supplied to the actuator by the energy source with a reference value, while the actuator is not operating the valve, and to provide a command on the basis of this comparison.

3. Valve according to claim 1 or 2, **characterized in that** the energy source supplies a pressurised fluid, the actuator comprises a pneumatic jack piston (5) and the first sensor (13) measures the fluid pressure at either end of the pneumatic jack piston (5).

4. Valve according to claim 2 and 3, **characterized in that** the second sensor (13) measures the fluid pressure arriving at the actuator upstream of the pneumatic jack piston (5) .

5. Valve according to claim 1 or 2, **characterized in that** the energy source supplies electric current, the actuator is an electromechanical transducer (23) and the first sensor (31) measures the electric power consumed from the energy source during operation of the valve.

6. Valve according to claim 2 and 5, **characterized in that** the second sensor (31) measures the electric voltage applied to the actuator by the energy source.

7. Valve according to claim 1, **characterized in that** the set value is a first value which the actual power consumed coming from the energy source must not exceed.

8. Valve according to claim 1, **characterized in that** the set value is a second value below which the actual power consumed coming from the energy source must not fall.

9. Valve according to claim 2, **characterized in that** the reference value is a value below which the actual magnitude representing the power capable of being supplied to the actuator by the energy source must not fall.

10. Valve according to one of the previous claims, **characterised in that** the actuator has a memory(15, 33) adapted to store the commands provided by the electronic circuit (11, 29) and the reference and set values.
